# EUROPEAN PATENT SPECIFICATION

(11) **EP 2 330 600 B1**
(45) Date of publication and mention of the grant of the patent: **25.03.2015**
(21) Application number: 09811486.1
(22) Date of filing: 01.09.2009
(51) Int. Cl.: H01B 3/40, C08G 59/02, C08G 59/50, C08G 59/62

(54) **INSULATING POLYMER MATERIAL COMPOSITION**
ISOLIERENDE ZUSAMMENSETZUNG AUS EINEM POLYMERMATERIAL
COMPOSITION DE MATÉRIAU POLYMÈRE ISOLANTE

(30) Priority: 02.09.2008 JP 2008224204
(43) Date of publication of application: 08.06.2011
(73) Proprietor: Meidensha Corporation, Tokyo 141-0032 (JP)
(72) Inventor: KURATA, Yasuyuki, Tokyo 141-0032 (JP)
(74) Representative: Manitz, Finsterwald & Partner GbR
(86) International application number: PCT/JP2009/065253
(87) International publication number: WO 2010/026960

(56) References cited:
- WO-A1-99/43729
- WO-A1-2007/126207
- WO-A1-2008/016119
- WO-A1-2008/096579
- JP-A- 9 259 638
- JP-A- 2000 090 740
- JP-A- 2007 031 498
- JP-A- 2007 035 337
- JP-A- 2008 195 759

## Description

### TECHNICAL FIELD

This invention relates to an insulating polymer material composition which is used, for example, for an insulating constitution of a voltage equipment (for example, a high voltage equipment such as a heavy electric equipment or the like) equipped with a switching equipment such as a circuit breaker, a disconnecting switch or the like in a casing.

As one to be applied (for example, applied upon being directly exposed to the outdoor) for an insulating constitution (for example, a section requiring insulating properties) of a voltage equipment (a heavy electric equipment or the like) equipped with a switching equipment such as a circuit breaker, a disconnecting switch or the like in a casing, an insulating polymer material composition (referred hereinafter to as insulating composition) which is, for example, in the form of a product (mold casting product: referred hereafter to as an insulating product) constituted of the insulating composition and formed by casting an insulating material has been conventionally extensively known. The insulating polymer material composition is obtained by heating and hardening (making three-dimensional crosslinking) the insulating material which is obtained by suitably mixing a variety of components such as hardening agent, filler (for example, inorganic filler such as silica, alumina and the like) and the like with an insulating polymer component such as epoxy resin (referred hereafter to as fossil-derived epoxy resin) or the like derived from fossil raw material (petroleum or the like).

Additionally, along with social upgrading and centralization, it has been eagerly required that a voltage equipment or the like has a high capacity and be made downsized and has high physical properties (for example, insulating properties (dielectric breakdown electric field characteristics and the like), mechanically physical properties (flexural strength and the like)) and the like, while improvements in a variety of characteristics on the above-mentioned insulating product have been required.

As the above-mentioned insulating polymer component, for example, bisphenol A type epoxy resin known as an industrial product has been extensively used; however, this bisphenol A type epoxy resin is recognized as an environmental hormone and exhibits harmfulness even if its amount is little (ppm order or less). There is the fear of causing environmental pollution and the like as far as there is the possibility of leaking of bisphenol A type epoxy (for example, leaking of unreacted low molecular weight components and the like) to the atmosphere even if it is present in a hardened matter such the insulating product. Further, in a production environment for the insulating product, a high concentration bisphenol A atmosphere tends to be readily formed, for example, at a synthesis step, a molding step or the like using bisphenol A type epoxy resin. Even if each step is made in an unmanned condition, equipments and the like for purifying the production environment are required thereby increasing a production cost. In view of these, use of bisphenol A type epoxy in the future is largely apprehensive.

Additionally, many insulating products (for example, products to be disposed owing to life, trouble or the like) as objects of disposition have been disposed merely by a landfill treatment; however, there is a tendency that final disposition places for the landfill treatment reduce year by year. This tendency is apprehensive, so that the former Health and Welfare Ministry of Japan estimated the remaining year for the final disposition places as the year of about Heisei 20 (2008), and the former Economic Planning Agency of Japan predicted depending on the above-mentioned estimation that cost for waster disposition elevated while an economic growth rate lowered. Upon taking account of the above, development of insulating products have been advanced taking account of global environment conservation (energy saving, prevention of global warning by suppressing CO₂ discharge, and like) and recycling.

However, a method of recycling has not yet been established so as to be hardly carried out. Exceptionally, members (PE cable covering members used in insulating products) relatively uniform in quality are collected to be used as thermal energy; however, this thermal energy requires a burning treatment step so that there is the fear of harming global environment. Additionally, also in this burning treatment, a variety of harmful substances and CO₂ are discharged in large amounts, so that there is the fear of harming global environment similarly to the above.

Trying to apply even a small amount of non-fossil-derived substances for each component (for example, inorganic filler and organic filler such as wood resource are used in combination as filler) other than the insulating polymer component has been made; however, an applying rate of the non-fossil-derived raw material to the whole insulating composition is small, and therefore a greater part is occupied with components depending on substances derived from fossil raw material.

Additionally, trying to apply biodegradable plastics (for example, polylactic acid-based resin) for the insulating polymer component is known (for example, Patent Citation 1); however, the biodegradable plastics are thermoplastic and are substances which tend to relatively readily melt (for example, melts at a temperature of about 100°C) so that it is said that application of them particularly to a high voltage equipment (a high voltage equipment whose temperature can rise to about 100°C in use) is not suitable.

Trying to apply thermosetting crosslinked composition using substances derived from living organism is known (for example, Patent Citation 2); however, aldehydes are used for a hardening agent, and therefore the composition has high mechanically physical properties under a temperature atmosphere at about ordinary temperature (for example, a temperature circumstance in a printed wiring board) whereas sufficient mechanically physical properties are difficult to be obtained by the composition under a high temperature atmosphere (for example, environment in which a voltage equipment or the like is used).

An insulating product using a heat-resistant epoxy resin, for example, having a glass transition point (referred hereinafter to as Tg) of 100 °C or higher from the view point of heat resistance is known; however, such an insulating product is hard and brittle, so that its crack incidence rate is high in case that it is used under a circumstance where temperature change is severe. For example, solid epoxy resin (for example, one which is -30 °C or lower in result of a crack resistance test using a metal conductor) is used as the insulating polymer component, and trying to improve a crack resistance and the like by adding a large amount of filler is carried out. However, the viscosity of the insulating material remarkably rises, so that a sufficient working life (pot life: the minimum time required for industrial operation) cannot be ensured, for example, in a casting operation or the like, and therefore there is the fear of degrading a workability.

The fossil-derived epoxy resin has been extensively generally known as the insulating polymer component meeting a variety of characteristics (insulating properties, mechanically physical properties and the like) required from the viewpoint of industrial materials; however, trying to use an epoxidized vegetable oil (referred hereinafter to as epoxidized vegetable oil) derived from non-fossil raw material in place of the fossil-derived epoxy resin has been carried out. For example, epoxidized linseed oil as an example of the epoxidized vegetable oil has been applied for a stabilizer for vinyl chloride similarly to epoxidized soybean oil; however, it is low in reactivity so as to be long in hardening time as compared with epoxy resin derived from fossil raw material, and insufficient in heat resistance and mechanically physical properties, so that it has not been applied for insulating products.

Epoxidized vegetable oil itself is hardly harmful and carbon-neutral. Even if an insulating product of epoxidized vegetable oil undergoes an incineration treatment, discharging harmful substances (for example, environmental hormone and the like), carbon dioxide and the like can be prevented or suppressed so as to be able to accomplish a large contribution in the field of insulating composition if being able to be improved in heat resistance, insulating properties and the like.

It is known to esterify an insulating oil (for example, Patent Citation 3) as a technique for lowering the viscosity of the insulating oil which technique cannot improve heat resistance, insulating properties and the like, different from that in the field of insulating composition.

### PRIOR ART CITATION

### PATENT CITATIONS

Patent Citation 1: Japanese Patent Provisional Publication No. 2002-358829 (for example, [0007] to [0012]) which is a patent publication of Japan.
Patent Citation 2: Japanese Patent Provisional Publication No. 2002-53699 (for example, [0007] to [0011]) which is a patent publication of Japan.
Patent Citation 3: Japanese Patent Provisional Publication No. 9-259683 (for example, [0004], [0016], [0017] and [0043]) which is a patent publication of Japan.

WO 2008/016119A1 discloses an insulating polymer material composition comprising a vegetable oil and being three-dimensionally crosslinked, wherein the vegetable oil may be an epoxidized vegetable oil.

WO 2008/096579 A1 is directed to an insulating polymer material composition formed of a kneaded substance obtained by adding a castor oil series polyol or phenol resin as a curing agent to an epoxidized linseed oil, wherein the kneaded substance is three-dimensionally crosslinked by heat treatment.

JP 2007-035337 A discloses an insulating polymer material composition provided by adding a phenol resin as a curing agent to epoxidized linseed oil, kneading and three-dimensional crosslinking the kneaded substance by heat treatment.

WO 99/43729 A1 discloses a complex composition comprising an epoxidized natural oil and a glycidyl compound or a cycloaliphatic epoxide in combination with an anhydride hardener and a specific imidazole, amidine or aminopyridine accelerator.

### DISCLOSURE OF INVENTION

### PROBLEMS TO BE SOLVED BY INVENTION

As discussed above, epoxidized vegetable oil such as epoxidized linseed oil and the like begin to come to the fore; however, it is too high in viscosity to form an insulating composition, and therefore there are problems to be improved in productivity (for example, operability and formability) and the like from the viewpoint of industrial materials.

For example, in case of casting an insulating material formed of epoxidized vegetable oil or the like, it is difficult to cause the insulating material to follow particularly the minute structures of the mold for casting, so that a productivity of the casting is inevitably lowered. Additionally, in case that a large amount of filler (for example, silica, alumina and/or the like) is blended in the insulating material, the viscosity becomes further high thereby lowering a productivity. In case of producing an insulating product provided with an insert (metal insert and/or the like disposed inside the insulating product), air bubbles tend to remain in a mold, so that insulating properties and mechanically physical properties (life and the like) are lowered particularly at a section corresponding to an insulating constitution having minute structures, thereby degrading the reliability of the insulating product.

In order to solve such problems relating to viscosity, it has been devised to set forming and processing temperatures for insulating material and the like, to high levels; however, with this measure, epoxidized vegetable oil unavoidably hardens earlier thereby shortening a working life (pot life). Particularly in case that the amount of the insulating material to be cast is large and in case that the time of casting is long, the working life becomes further short. Additionally, the technique as disclosed in Patent Citation 3 is different from the technical field of the insulating composition and therefore has not been applied.

From the above-mentioned matters, it is required not only to merely improve the insulating properties, heat resistance, mechanically physical properties and the like of the insulating composition but also to lower the viscosity of the insulating material (insulating polymer component) so as to improve a productivity thereby raising the reliability of the insulating product.

### MEANS FOR SOLVING THE PROBLEMS

The present invention is to solve the above-mentioned problems and is an insulating polymer material composition which is obtained by three-dimensionally crosslinking an insulating material including at least an insulating polymer component under heating and used for an insulating constitution of a voltage equipment, characterized in that the insulating polymer component is an epoxidized vegetable oil ester, the epoxidized vegetable oil ester being obtained by epoxidizing a vegetable oil ester, the vegetable oil ester being an unsaturated fatty acid ester obtained by esterifying a vegetable oil with an alcohol.

Another embodiment of the epoxidized vegetable oil ester is characterized by being an epoxidized linseed oil ester.

Another embodiment of the insulating material is characterized in that a hardening agent including a polyphenol is blended.

Another embodiment of the hardening agent is characterized by being a phenol resin.

A further embodiment of the hardening agent is characterized by being blended in an amount within a range of from 0.5 to 2.0 times (preferably 0.8 to 1.5 times) relative to the stoichiometric quantity ratio according to an epoxy equivalent which is calculated from an oxirane concentration of the epoxidized vegetable oil ester.

A further embodiment of the insulating material is characterized in that imidazole is blended as a hardening accelerator in an amount within a range of from 0.1 to 30 phr relative to 100 phr of the epoxidized vegetable oil ester.

### EFFECTS OF THE INVENTION

As discussed above, according to the present invention, not only contribution is made on global environment conservation but also sufficiently satisfactory insulating properties, heat resistance, mechanically physical properties and the like can be obtained in an insulating composition while lowering the viscosity of an insulating material (insulating polymer component) thereby making it possible to improve a productivity. Additionally, this can improve the reliability of an insulating product to which such an insulating polymer material composition is applied.

### MODE FOR CARRYING OUT THE INVENTION

Hereinafter, an insulating polymer material composition in an embodiment of the present invention will be discussed in detail.

This embodiment is an insulating polymer material composition obtained by three-dimensionally crosslinking an insulating material including an insulating polymer component and the like and used for an insulting constitution of a voltage equipment. As the above-mentioned insulating polymer composition, esterified and epoxidized vegetable oil is applied different from a conventional technique in which mere epoxidized vegetable oil is applied. Specifically, for example, a vegetable oil such as linseed oil or the like is esterified to obtain fatty acid ester as discussed after. The fatty acid ester is epoxidized to obtain an epoxidized vegetable oil ester which is to be applied for.

The epoxidized vegetable oil ester which is obtained by making esterification and epoxidation not only does not harm global environment but also sufficiently meets a variety of characteristics (insulating properties, heat resistance, mechanically physical properties and the like) required from the viewpoints of industrial materials while being low in viscosity thereby improving a productivity such as workability and the like when applied for the insulating polymer component, as compared with mere epoxidized vegetable oil or the like.

### [Insulating polymer component]

A variety of known methods can be applied for esterification of vegetable oil. Examples of alcohol component corresponding to the esterification are aliphatic alcohols including methyl alcohol, ethyl alcohol, propyl alcohol, propyl alcohols and butyl alcohols. The purpose of the esterification of this embodiment is to obtain fatty acid and glycerol from vegetable oil as fat and oil. Saturated or unsaturated state, number (valency) of OH group, position (primary, secondary or tertiary) and the like of each alcohol component can be suitably selected if they are within a range where the characteristics of the aimed insulating composition are not largely degraded.

A vegetable oil ester (for example, fatty acid ester of linseed oil) as fatty acid ester can be obtained by refluxing the alcohol component as mentioned above together with vegetable oil in presence of known acidic catalyst (sulfuric acid or the like) or basic catalyst (sodium hydroxide or the like) and, if necessary, by making a variety of treatments such as neutralization (pH adjustment), distillation (separation of impurities and water content), purification (activated carbon or bleaching clay treatment) and the like.

The above-mentioned vegetable oil ester is unsaturated fatty acid ester whose unsaturated sections are epoxidized thereby obtaining epoxidized vegetable oil ester which is aimed. The above-mentioned epoxidation of the unsaturated sections can be accomplished, for example, with peroxide such as perbenzoic acid (C₆H₅-CO-OOH) or the like, in which purification is suitably carried out if necessary.

The above-mentioned epoxidized vegetable oil ester undergoes three-dimensional crosslinking in its desirable form thereby obtaining the insulating composition which can be applied for the insulating constitution of a variety of voltage equipments. By esterifying vegetable oil to obtain fatty acid and glycerol and then by making epoxidation like in the embodiment of the present invention, the insulating polymer component can be lowered in viscosity without changing an epoxy equivalent.

### [Components to be blended, other than insulating polymer component]

Filler, hardening agent and the like can be suitably blended similarly to in conventional techniques, as components other than the epoxidized vegetable oil ester.

For the filler, a variety of fillers applied in the field of insulating composition can be applied, in which examples of the filler are silica, alumina and the like. A blending rate and the like of this filler are suitably set according to an aimed insulating product; however, there is the fear of degrading dispersability and formability in case that the blending amount of the filler is too much.

For the hardening agent, a variety of hardening agents which can react, for example, with epoxidized vegetable oil ester can be applied. Examples of the hardening agent are phenols such as polyphenol (for example, phenol resin) and the like, amines, acid anhydrides and the like. Concerning the blending amount of this hardening agent, for example, an epoxy equivalent of the epoxidized vegetable oil ester is calculated (calculated from an oxirane concentration in case of epoxidized linseed oil), and then the hardening agent in a stoichiometric quantity depending on the epoxy equivalent can be blended (for example, blended in an amount of 1.0 relative to a stoichiometric quantity ratio). Such a blending rate of the hardening agent can be suitably set, for example, according to the order of priority in physical properties required for the aimed insulating product.

Additionally, a variety of additives can be suitably used for the purposes of, for example, improving workability (for example, shortening a working time and the like), formability, Tg characteristics, mechanically physical properties, electrically physical properties and the like, in which hardening accelerator (starting point of hardening of hardening agent: for example, organic peroxide, amines, imidazoles or the like), reaction retarding agent, reaction promoting agent (for the purpose of controlling reaction (Tg characteristics): peroxide or the like) and the like can be suitably used in combination.

Crosslinking in this embodiment is essentially owing to the hardening agent, and therefore a crosslinked structure cannot be affected by a hardening condition and by the presence or absence of the above-mentioned hardening accelerator, reaction retarding agent, reaction promoting agent and the like.

For example, the hardening condition (temperature, time and the like) is suitably set to obtain the physical properties of the aimed insulating composition (for example, suitably set according to the kinds and the blending amount of the hardening accelerator), in which the physical properties themselves do not make their large differences even if the hardening conditions are different. Additionally, reaction accelerating agent and the reaction retarding agent are suitably applied to raise and make the reaction safe (suppressing the reaction) for the purposes of improving workability, productivity and the like, in which the physical properties themselves do not make their large differences even if the kinds and blending rates of the reaction accelerating agent and the reaction retarding agent are different. Further, the reaction promoting agent is suitably applied (for example, suitably applied according to the hardening condition and the kinds of the hardening accelerator and the like, and the blending amount) to adjust reactivity (for example, adjusting Tg characteristics in case of peroxide) similarly to the above-mentioned reaction accelerating agent and reaction retarding agent, in which the physical properties themselves do not make their large differences even if the kinds and blending rates of the reaction promoting agent are different.

### [Production method]

The insulating material can be obtained by suitably blending various components as mentioned above by mixing them, for example, under a mill treatment, an agitation treatment or the like. The above-mentioned insulating material is cast in a metal mold having a certain shape and hardened under heating, thereby forming the aimed insulating composition. The conditions of the above-mentioned mill treatment, agitation treatment or the like are suitably set according to the blending amount, kinds and the like of the various components. Additionally, forming conditions can be suitably set, in which a variety of forming methods such as vacuum casting, pressure casting, transfer casting, injection molding and the like can be applied.

### [Examples]

Next, Examples of the insulating composition according to the embodiment will be discussed.

First, as indicated in Table 1 shown below, epoxidized linseed oil (Daimac L-500 produced by Daicel Chemical Industries, Ltd.) or epoxidized linseed oil ester obtained by esterifying linseed oil (produced by Kaneda Corporation) was used in an amount of 100 phr as insulating polymer component. Phenol resin (phenol-formaldehyde type novolak (PR-HF-3) produced by Sumitomo Bakelite Co., Ltd.) was used in an amount corresponding to the stoichiometric quantity as hardening agent. Imidazole (2-ethyl-4-methyl imidazole (2E4MZ) produced by Shikoku Chemicals Corporation) was used in an amount of 4 phr as hardening accelerator. Silica (MCF-4 produced by Tatsumori Ltd.) was used in a certain amount as filler. The respective components were mixed to obtain a variety of insulating materials M1 to M10 as shown in Table 1 mentioned below.

Concerning epoxidized linseed oil ester, first, ethyl alcohol (first class, produced by Junsei Chemical Co., Ltd.) in an amount of 120 % of the stoichiometric quantity and sulfuric acid (2N sulfuric acid, produced by Junsei Chemical Co., Ltd.) in an amount of 5 % of the stoichiometric quantity were added to the linseed oil, and then underwent reflux at a boiling temperature in the atmosphere thereby obtaining the epoxidized linseed oil ester. Thereafter, perbenzoic acid (first class, produced by Junsei Chemical Co., Ltd.) in an amount of 150 % of the stoichiometric quantity was added to the above-mentioned epoxidized linseed oil ester thereby obtaining the aimed epoxidized linseed oil ester.

Additionally, the phenol resin was blended in an amount of 1 time quantity relative to the stoichiometric quantity ratio upon calculating the epoxy equivalent from the oxirane concentration of the used insulating polymer component.

**[Table 1]**

| | Insulating material | | | | | | | | | |
|---|---|---|---|---|---|---|---|---|---|---|
| | M1 | M2 | M3 | M4 | M5 | M6 | M7 | M8 | M9 * | M10 * |
| Epoxidized linseed oil (phr) | - | - | - | - | - | - | - | - | 100 | 100 |
| Epoxidized linseed oil ester (phr) | 100 | 100 | 100 | 100 | 100 | 100 | 100 | 100 | - | - |
| Phenol resin (stoichiometric quantity ratio) | 1.0 | 1.0 | 1.0 | 1.0 | 1.0 | 1.0 | 1.0 | 1.0 | 1.0 | 1.0 |
| Imidazole (phr) | 4.0 | 4.0 | 4.0 | 4.0 | 4.0 | 4.0 | 4.0 | 4.0 | 4.0 | 4.0 |
| Silica (vol%) | 40 | 45 | 50 | 53 | 56 | 60 | 63 | 66 | 40 | 43 |

| | | | | | | | | | | |
|---|---|---|---|---|---|---|---|---|---|---|
| * Comparative Examples | | | | | | | | | | |

Then, the above-mentioned insulating materials M1 to M10 were respectively cast (heating and hardening at a temperature of 150 °C for 24 hours) into certain shapes (10 mm x 5 mm x 200 mm). Upon this, observation was made as to whether the insulating composition could be formed (cast) or not from the viewpoint of productivity, while volume resistivity (Ω·cm) according to JIS K6911 for insulating properties, Tg (°C) according to TMA method for heat resistance, and flexural strength (MPa) in the atmosphere of temperature of 20°C according to a three-point bending test and linear expansion coefficient (x 10⁻⁶) according to TMA method were respectively measured. Results of the above measurements are shown in Table 2.

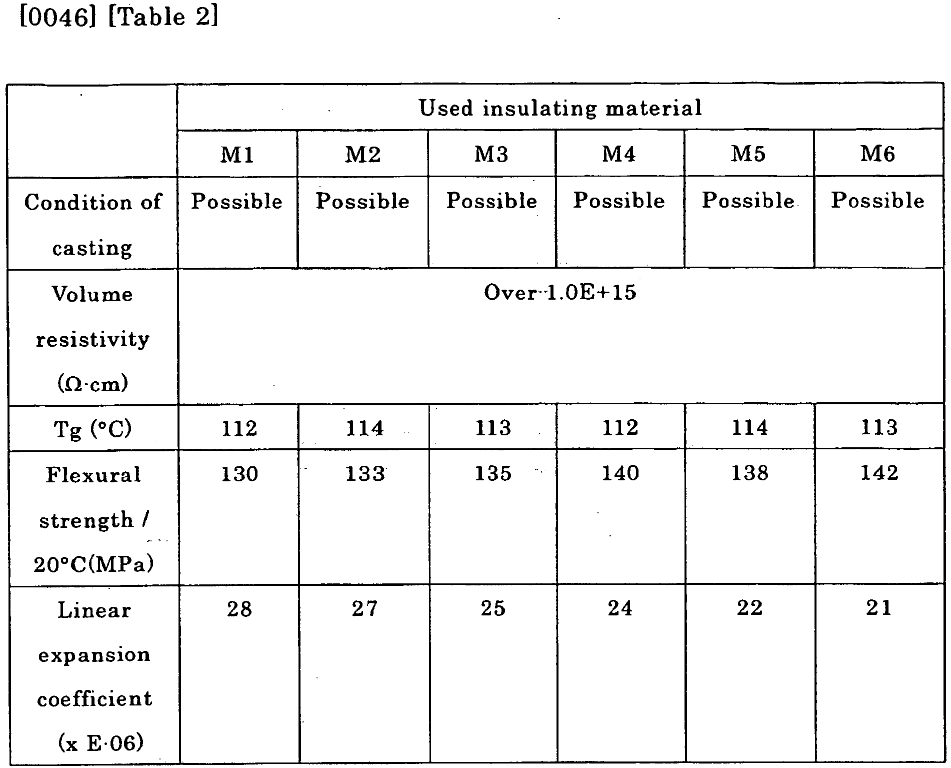

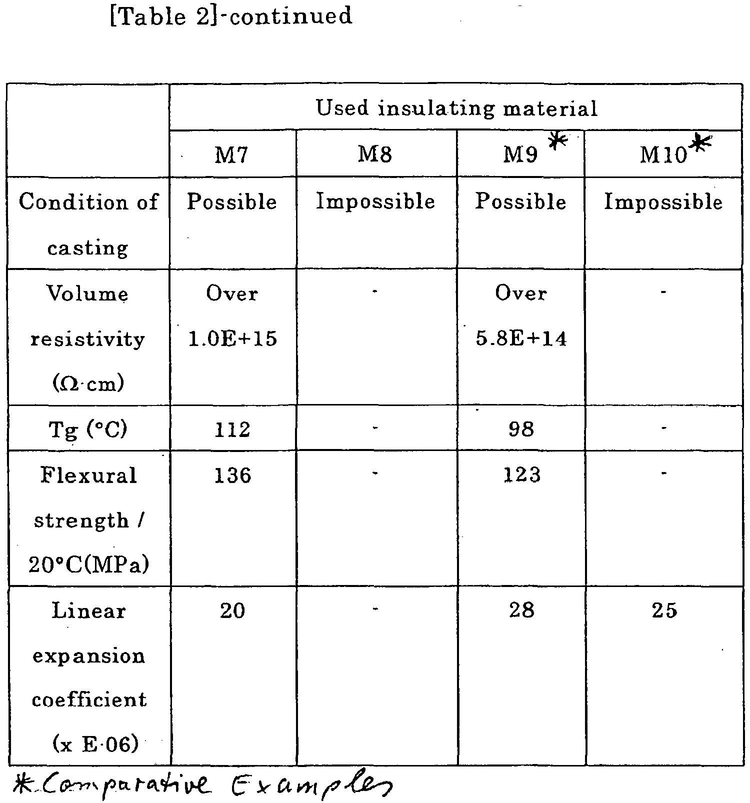

As shown in Table 2, in case of using mere epoxidized linseed oil as the insulating polymer component, the viscosity of the insulating material was too high so that formation is impossible or difficult as the insulating material M10, if the blending amount of the filler was suppressed lower as the insulating material M9. Additionally, even in case that the blending amount of the filler was suppressed lower, insulating properties and heat resistance were insufficient though sufficient mechanically physical properties were obtained as the insulating material M9. The insulating material M10 was impossible to be cast as aimed; however, a composition to be used for measuring the linear expansion coefficient could be obtained.

In case of using the epoxidized linseed oil ester, the productivity was satisfactory without suppressing the blending amount of the filler as the insulating material M9, and besides insulating properties, heat resistance and mechanically physical properties were also satisfactory.

From the results discussed above, it was confirmed, by applying the epoxidized vegetable oil ester as the insulating polymer component as in the insulating materials M1 to M7, productivity becomes satisfactory while insulating properties, heat resistance and mechanically physical properties become satisfactory in the insulating composition, as compared with applying mere epoxidized vegetable oil.

Additionally, the filler can be blended in an amount within a range which is generally applied in the field of insulating composition (for example, blended as in the insulating materials M1 to M7 in Examples). Accordingly, it will be understood that a sufficient formability can be maintained if the filler is not blended in an excessive amount (for example, blended as in the insulating material M8 in Examples).

The kinds and the blending amount of the hardener are suitably set according to the aimed insulating composition, in which it was confirmed that the results similar to those in the insulating materials M1 to M7 could be obtained by blending polyphenol in an amount within a range of 0.5 to 2.0 times (preferably 0.8 to 1.5 times) relative to the stoichiometric quantity ratio, to 100 phr of the epoxidized vegetable oil ester. Additionally, the kinds and blending amount of the hardening accelerator is similarly suitably set, in which it was confirmed that the results similar to those in the insulating materials M1 to M7 could be obtained also in case of blending imidazole in an amount within a range of 0.1 to 30 phr (preferably 0.2 to 15 phr) to 100 phr of the epoxidized vegetable oil ester.

As discussed above, concerning the present invention, while discussion has been made in detail on specific examples, it is apparent by the skilled in the art that various changes and modifications may be made without departing from the spirit of the technical idea of the present invention. Additionally, it is a matter of course that such changes and modifications belong to the scope of the accompanying claims.

For example, the mixing conditions, hardening conditions and the like of the insulating material are suitably set according to the kinds and blending amounts of the epoxidized vegetable oil ester and a variety of components (the hardening agent, hardening accelerator, filler and the like), in which they are not limited to the contents shown in the Examples. Additionally, it is apparent that effects similar to those shown in the Examples can be obtained even in cases where a variety of additives (for example, components other than those in the Examples) are suitably blended within a range where the characteristics of the aimed insulating composition cannot be degraded, in addition to the above-mentioned epoxidized vegetable oil ester, hardening agent, hardening accelerator and filler.

## Claims

1. An insulating polymer material composition which is obtained by three-dimensionally crosslinking an insulating material including at least an insulating polymer component under heating and used for an insulating constitution of a voltage equipment,
**characterized in that** the insulating polymer component is an epoxidized vegetable oil ester, the epoxidized vegetable oil ester being obtained by epoxidizing a vegetable oil ester, the vegetable oil ester being an unsaturated fatty acid ester obtained by esterifying a vegetable oil with an alcohol.

2. An insulating polymer material composition as claimed in Claim 1, **characterized in that** the epoxidized vegetable oil ester is an epoxidized linseed oil ester.

3. An insulating polymer material composition as claimed in Claim 1 or 2, **characterized in that** a hardening agent including a polyphenol is blended in the insulating material.

4. An insulating polymer material composition as claimed in Claim 3, **characterized in that** the hardening agent is a phenol resin.

5. An insulating polymer material composition as claimed in Claim 3 or 4, **characterized in that** the hardening agent is blended in an amount within a range of from 0.5 to 2.0 times relative to a stoichiometric quantity ratio according to an epoxy equivalent which is calculated from an oxirane concentration of the epoxidized vegetable oil ester.

6. An insulating polymer material composition as claimed in any of Claims 1 to 5, **characterized in that** imidazole is blended as a hardening accelerator in an amount within a range of from 0.1 to 30 parts by weight relative to 100 parts by weight of the epoxidized vegetable oil ester in the insulating material.

7. An insulating polymer material composition as claimed in Claim 1, **characterized in that** the vegetable oil ester is obtained by esterifying a vegetable oil with an aliphatic alcohol.

8. An insulating polymer material composition as claimed in Claim 7, **characterized in that** the vegetable oil is linseed oil.

9. An insulating polymer material composition as claimed in Claim 7, **characterized in that** the aliphatic alcohol is at least one selected from the group consisting of methyl alcohol, ethyl alcohol, propyl alcohol and butyl alcohol.

10. A method of producing an insulating polymer material composition used for an insulating constitution of a voltage equipment, comprising:
esterifying a vegetable oil with an alcohol to obtain a vegetable oil ester being an unsaturated fatty acid ester;
epoxidizing the vegetable oil ester to obtain a polymer component forming part of an insulating material; and
hardening the insulating material under three-dimensional crosslinking.

11. A method as claimed in Claim 10, **characterized in that** the vegetable oil is linseed oil.

12. A method as claimed in Claim 10, **characterized in that** the alcohol is at least one selected from the group consisting of methyl alcohol, ethyl alcohol, propyl alcohol and butyl alcohol.

13. A method as claimed in Claim 10, **characterized in that** the hardening is accomplished by blending a hardening agent including a polyphenol in the insulating material.

14. A method as claimed in Claim 13, **characterized in that** the hardening agent is a phenol resin.

15. A method as claimed in Claim 14, **characterized in that** the hardening agent is blended in an amount within a range of from 0.5 to 2.0 times relative to a stoichiometric quantity ratio according to an epoxy equivalent which is calculated from an oxirane concentration of the epoxidized vegetable oil ester.

16. A method as claimed in Claim 15, **characterized in that** the hardening is accomplished by further blending imidazole as a hardening accelerator in an amount within a range of from 0.1 to 30 parts by weight relative to 100 parts by weight of the epoxidized vegetable oil ester in the insulating material.

## Patentansprüche

1. Isolierende Polymaterialzusammensetzung, welche durch dreidimensionales Vernetzen eines wenigstens eine Isolierpolymerkomponente enthaltenden Isoliermaterials unter Erhitzen erhalten worden ist und für eine Isoliereinrichtung einer Spannungsanlage eingesetzt wird,
**dadurch gekennzeichnet, dass** die Isolierpolymerkomponente ein epoxidierter Pflanzenölester ist, wobei der epoxidierte Pflanzenölester durch Epoxidieren eines Pflanzenölesters erhalten worden ist, wobei der Pflanzenölester ein ungesättigter Fettsäureester ist, welcher durch Verestern eines Pflanzenöls mit einem Alkohol erhalten worden ist.

2. Isolierende Polymermaterialzusammensetzung nach Anspruch 1, **dadurch gekennzeichnet, dass** der epoxidierte Pflanzenölester ein epoxidierter Leinsamenölester ist.

3. Isolierende Polymermaterialzusammensetzung nach Anspruch 1 oder 2, **dadurch gekennzeichnet**; dass ein Härtungsmittel, welches ein Polyphenol enthält, in dem isolierenden Material eingemischt ist.

4. Isolierende Polymermaterialzusammensetzung nach Anspruch 3, **dadurch gekennzeichnet, dass** das Härtungsmittel ein Phenolharz ist.

5. Isolierende Polymermaterialzusamensetzung nach Anspruch 3 oder 4, **dadurch gekennzeichnet, dass** das Härtungsmittel in einer Menge in einem Bereich von 0,5 bis 2,0-fach relativ zu dem stöchiometrischen Mengenverhältnis gemäß einem Epoxyäquivalent, welches aus der Oxirankonzentration des epoxidierten Pflanzenölesters berechnet wird, eingemischt ist.

6. Isolierende Polymermaterialzusammensetzung nach einem der Ansprüche 1 bis 5, **dadurch gekennzeichnet, dass** in dem isolierenden Material Imidazol als ein Härtebeschleuniger in einer Menge in einem Bereich von 0,1 bis 30 Gewichtsteilen bezogen auf 100 Gewichtsteile bezogen des epoxidierten Pflanzenölesters eingemischt ist.

7. Isolierende Polymermaterialzusammensetzung nach Anspruch 1, **dadurch gekennzeichnet, dass** der Pflanzenölester durch Verestern eines Pflanzenöls mit einem aliphatischen Alkohol erhalten worden ist.

8. Isolierende Polymermaterialzusammensetzung nach Anspruch 7, **dadurch gekennzeichnet, dass** das Pflanzenöl Leinsamenöl ist.

9. Isolierende Polymermaterialzusammensetzung nach Anspruch 7, **dadurch gekennzeichnet, dass** der aliphatische Alkohol wenigstens einer ausgewählt aus der Gruppe bestehend aus Methylalkohol, Ethylalkohol, Propylalkohol und Butylalkohol ist.

10. Verfahren zum Herstellen einer isolierenden Polymermaterialzusammensetzung, welche für eine Isoliereinrichtung einer Spannungsanlage eingesetzt wird, welches umfasst:
Verestern eines Pflanzenöls mit einem Alkohol, um einen Pflanzenölester zu erhalten, welcher ein ungesättigter Fettsäureester ist,
Epoxidieren des Pflanzenölesters, um eine Polymerkomponente zu erhalten, welche ein Teil eines Isoliermaterials ausbildet, und
Härten des Isoliermaterials unter dreidimensionalem Vernetzen.

11. Verfahren nach Anspruch 10, **dadurch gekennzeichnet, dass** das Pflanzenöl Leinsamenöl ist.

12. Verfahren nach Anspruch 10, **dadurch gekennzeichnet, dass** der Alkohol wenigstens einer ist, welcher aus der Gruppe bestehend aus Methylalkohol, Ethylalkohol, Propylalkohol und Butylalkohol ausgewählt ist.

13. Verfahren nach Anspruch 10, **dadurch gekennzeichnet, dass** das Härten durch Einmischen eines Härtungsmittels, welches ein Polyphenol enthält, in das Isoliermaterial erreicht wird.

14. Verfahren nach Anspruch 13, **dadurch gekennzeichnet, dass** das Härtemittel ein Phenolharz ist.

15. Verfahren nach Anspruch 14, **dadurch gekennzeichnet, dass** das Härtemittel in einer Menge in einem Bereich zwischen 0,5 und 2,0-fach relativ zu dem stöchiometrischen Mengenverhältnis gemäß einem Epoxyäquivalent, welches aus der Oxirankonzentration des epoxidierten Pflanzenölesters berechnet wird, eingemischt wird.

16. Verfahren nach Anspruch 15, **dadurch gekennzeichnet, dass** das Härten durch weiteres Einmischen von Imidazol als ein Härtungsbeschleuniger in einer Menge in einem Bereich zwischen 0,1 und 30 Gewichtsteilen bezogen auf 100 Gewichtsteile des epoxidierten Pflanzenölesters in das isolierende Material erreicht wird.

## Revendications

1. Composition de matériau isolant en polymère qui est obtenue par réticulation tridimensionnelle d'un matériau isolant incluant au moins un composant polymère isolant par chauffage et utilisée pour une constitution isolante d'un équipement sous voltage,
**caractérisée en ce que** le composant polymère isolant est un ester d'huile végétale époxydé, l'ester d'huile végétale époxydé étant obtenu en époxydant un ester d'huile végétale, l'ester d'huile végétale étant un ester d'acide gras insaturé obtenu en estérifiant une huile végétale avec un alcool.

2. Composition de matériau isolant en polymère selon la revendication 1, **caractérisée en ce que** l'ester d'huile végétale époxydé et un ester d'huile de graine de lin époxydé.

3. Composition de matériau isolant en polymère selon la revendication 1 ou 2, **caractérisée en ce qu'**un agent durcisseur incluant un polyphénol est mélangé dans le matériau isolant.

4. Composition de matériau isolant en polymère selon la revendication 3, **caractérisée en ce que** l'agent durcisseur est une résine au phénol.

5. Composition de matériau isolant en polymère selon la revendication 3 ou 4, **caractérisée en ce que** l'agent durcisseur est mélangé dans une quantité dans une plage de 0,5 à 2,0 fois par rapport à un rapport quantitatif stoechiométrique en accord avec un équivalent époxy qui est calculé à partir d'une concentration en oxyrane de l'ester d'huile végétale époxydé.

6. Composition de matériau isolant en polymère selon l'une quelconque des revendications 1 à 5, **caractérisée en ce que** du imidazole est mélangé à titre d'accélérateur durcisseur dans une quantité dans une plage de 0,1 à 30 parts en poids par rapport à 100 parts en poids de l'ester d'huile végétale époxydé dans le matériau isolant.

7. Composition de matériau isolant en polymère selon la revendication 1, **caractérisée en ce que** l'ester d'huile végétale est obtenu en estérifiant une huile végétale avec un alcool aliphatique.

8. Composition de matériau isolant en polymère selon la revendication 7, **caractérisée en ce que** l'huile végétale est de l'huile de graines de lin.

9. Composition de matériau isolant en polymère selon la revendication 7, **caractérisée en ce que** l'alcool aliphatique et au moins un alcool sélectionné parmi le groupe comprenant alcool méthylique, alcool éthylique, alcool propylique et alcool butylique.

10. Procédé pour produire une composition de matériau isolant en polymère utilisé pour une constitution isolante d'un équipement sous voltage, comprenant les étapes consistant à :
estérifier une huile végétale avec un alcool pour obtenir un ester d'huile végétale qui est un ester d'acide gras insaturé ;
époxyder l'ester d'huile végétale pour obtenir un composant polymère qui fait partie d'un matériau isolant ; et
faire durcir le matériau isolant sous réticulation tridimensionnelle.

11. Procédé selon la revendication 10, **caractérisé en ce que** l'huile végétale est de l'huile de graines de lin.

12. Procédé selon la revendication 10, **caractérisé en ce que** l'alcool est au moins un alcool sélectionné parmi le groupe comprenant alcool méthylique, alcool éthylique, alcool propylique et alcool butylique.

13. Procédé selon la revendication 10, **caractérisé en ce que** le durcissement est accompli en mélangeant un agent durcisseur incluant un polyphénol dans le matériau isolant.

14. Procédé selon la revendication 13, **caractérisé en ce que** l'agent durcisseur est une résine au phénol.

15. Procédé selon la revendication 14, **caractérisé en ce que** l'agent durcisseur est mélangé dans une quantité dans une plage de 0,5 à 2,0 fois par rapport à un rapport quantitatif stoechiométrique en accord avec un équivalent époxy qui est calculé depuis une concentration en oxyrane de l'ester d'huile végétale époxydé.

16. Procédé selon la revendication 15, **caractérisé en ce que** le durcissement est accompli en mélangeant en outre du imidazole à titre d'accélérateur durcisseur dans une quantité dans une plage de 0,1 à 30 parts en poids par rapport à 100 parts en poids de l'ester d'huile végétale époxydé dans le matériau isolant.
